# EUROPEAN PATENT APPLICATION

(11) **EP 4 632 013 A1**
(43) Date of publication of application: **15.10.2025**
(21) Application number: 23900606.7
(22) Date of filing: 04.12.2023
(51) Int. Cl.: C08L 101/00, C04B 35/634, C04B 35/638, C08K 3/00, C08K 5/1539, C08L 33/04

(54) **INORGANIC PARTICLE DISPERSED SLURRY COMPOSITION AND METHOD FOR PRODUCING INORGANIC SINTERED BODY**

(30) Priority: 07.12.2022 JP 2022195844
(71) Applicant: Sekisui Chemical Co., Ltd., Osaka-shi, Osaka 530-0047 (JP)
(72) Inventor: YAMAUCHI, Kenji, Koka-shi, Shiga 528-8585 (JP); OTSUKA, Jo, Shunan-shi, Yamaguchi 746-0006 (JP)
(74) Representative: Cabinet Beau de Loménie
(86) International application number: PCT/JP2023/043243
(87) International publication number: WO 2024/122491

(57) **Abstract**

The present invention provides an inorganic-particle-dispersed slurry composition that has excellent storage stability and printability, can promote binder removal treatment even at low temperature, can suppress oxidation of inorganic particles, leaves less residual carbon after firing, has excellent sinterability, and can provide a highly reliable electronic component. The present invention also provides a method for producing an inorganic sintered article using the slurry composition. Provided is an inorganic-particle-dispersed slurry composition, containing: a binder resin (A); inorganic particles (B); and a solvent (C), the inorganic-particle-dispersed slurry composition further containing, as a binder removal aid (D), a carboxylic anhydride having a boiling point of 200°C or higher and an oxygen atom content of 40% by weight or more.

## Description

### TECHNICAL FIELD

The present invention relates to inorganic-particle-dispersed slurry compositions and methods for producing inorganic sintered articles.

### BACKGROUND ART

Inorganic-particle-dispersed slurry compositions, which contain inorganic particles such as ceramic powder or glass particles dispersed in a binder resin, are used in the production of various electronic components. These slurry compositions are formed into sheets, called green sheets, through an applying step and a drying step.

The ceramic green sheets containing inorganic particles and a binder resin are subjected to screen printing or other processes to form an electrode layer thereon and are stacked on top of each other. The resulting stack is heated in a firing furnace to decompose and remove the binder resin inside and to sinter the inorganic particles. In this manner, various electronic components are produced.

With the recent increasing need for sustainable business processes, there is demand for a binder resin that can be removed in a shorter time at lower temperature. Making low-temperature treatment possible can reduce the energy consumption of the heating furnace and also prevent thermal or oxidative degradation of the inorganic components in electronic components, enabling the manufacture of more reliable electronic components.

Patent Literature 1 discloses the production of an all-solid-state battery using a low-temperature-decomposable acrylic binder, wherein debinding is performed in the air by raising the temperature from room temperature to 500°C at a temperature rise rate of 20°C/min and holding the temperature at 500°C for 30 minutes.

Patent Literature 2 discloses the production of a sealant for electronic components using a low-melting-point glass paste, wherein the glass paste contains an aliphatic polypropylene carbonate as a low-temperature-decomposable binder. At this time, debinding and firing of the glass paste are performed by raising the temperature to 430°C under a nitrogen atmosphere and holding the glass paste at this firing temperature for 10 minutes before cooling it to room temperature.

### CITATION LIST

### - Patent Literature

Patent Literature 1: JP 2018-77989 A
Patent Literature 2: JP 2011-178606 A

### SUMMARY OF INVENTION

### - Technical Problem

Since acrylic binders allow a broad choice of solvents and easy adjustment of resin strength, the method of Patent Literature 1 can provide a slurry composition for producing green sheets. However, the debinding requires a high temperature of 500°C in an air atmosphere, and such a condition may easily cause property degradation such as oxidation depending on the inorganic material used.

The propylene carbonate disclosed in Patent Literature 2 is more decomposable than acrylic resins under a nitrogen atmosphere but gives a narrow choice of solvents. Moreover, the resin may decompose under non-neutral pH conditions, which may lead to poor storage stability of the inorganic-particle-dispersed slurry.

The present invention aims to provide an inorganic-particle-dispersed slurry composition that has excellent storage stability and printability, can promote binder removal treatment even at low temperature, can suppress oxidation of inorganic particles, leaves less residual carbon after firing, has excellent sinterability, and can provide a highly reliable electronic component. The present invention also aims to provide a method for producing an inorganic sintered article using the slurry composition.

### - Solution to problem

The disclosure (1) relates to an inorganic-particle-dispersed slurry composition, containing: a binder resin (A); inorganic particles (B); and a solvent (C), the inorganic-particle-dispersed slurry composition further containing, as a binder removal aid (D), a carboxylic anhydride having a boiling point of 200°C or higher and an oxygen atom content of 40% by weight or more.

The disclosure (2) replates to the inorganic-particle-dispersed slurry composition according to disclosure (1), wherein the carboxylic anhydride is an anhydride of at least one carboxylic acid selected from the group consisting of succinic acid, maleic acid, citric acid, glutaric acid, diglycolic acid, methoxyacetic acid, itaconic acid, citraconic acid, trimellitic acid, cyclobutanetetracarboxylic acid, tricarballylic acid, butanetetracarboxylic acid, and cyclopentanetetracarboxylic acid.

The disclosure (3) relates to the inorganic-particle-dispersed slurry composition according to the disclosure (1) or (2), wherein the carboxylic anhydride is contained in an amount of 5 parts by weight or more and 30 parts by weight or less relative to 100 parts by weight of the binder resin (A).

The disclosure (4) relates to the inorganic-particle-dispersed slurry composition according to any one of the disclosures (1) to (3), wherein the binder resin (A) contains a (meth)acrylic resin.

The disclosure (5) relates to the inorganic-particle-dispersed slurry composition according to the disclosure (4), wherein the (meth)acrylic resin contains 50% by weight or more of a segment derived from a (meth)acrylate containing an ester substituent having a carbon number of 4 or greater and having a branched structure.

The disclosure (6) relates to a method for producing an inorganic sintered article, including the steps of: drying the inorganic-particle-dispersed slurry composition according to any one of the disclosures (1) to (5) to provide an inorganic-particle-dispersed formed article; and debinding the inorganic-particle-dispersed formed article at 300°C or lower.

The present invention is described in detail below.

As a result of extensive studies, the present inventors have found that a slurry composition containing a binder resin and a binder removal aid with a specific structure has excellent storage stability and printability. The inventors have also found that the slurry composition, when used to produce an inorganic sintered article, can promote binder removal treatment even at low temperature, can suppress oxidation of inorganic particles, leaves less residual carbon after firing, has excellent sinterability, and can provide a highly reliable electronic component. The inventors thus completed the present invention.

### <Binder resin (A)>

The slurry composition contains a binder resin (A).

Examples of the binder resin (A) include (meth)acrylic resins, polystyrene resins, polyvinyl acetate resins, polyacetal resins, and polycarbonate resins. Preferred among these are (meth)acrylic resins because they have excellent low-temperature decomposability.

Combining a (meth)acrylic resin with the later-described carboxylic anhydride in the slurry composition enables the binder removal treatment to proceed at low temperature even in a nitrogen atmosphere without using oxygen in the binder removal treatment, and thus can suppress oxidation of the inorganic particles.

Combining a (meth)acrylic resin with any of the above-mentioned other binder resins as the binder resin (A) results in better low-temperature decomposability.

The binder resin (A) has a weight average molecular weight (Mw) of preferably 20,000 or greater and preferably 4,000,000 or less.

A Mw of 20,000 or greater prevents the slurry composition from having too low a viscosity and can lead to good dispersibility of the inorganic particles. A Mw of 4,000,000 or less can enhance coating film strength and allows the slurry composition to have sufficiently high viscosity, leading to improved storage stability and excellent printability.

The Mw is preferably 30,000 or greater, more preferably 40,000 or greater and is preferably 3,000,000 or less, more preferably 2,000,000 or less, still more preferably 1,000,000 or less, further preferably 500,000 or less. The Mw is preferably 20,000 to 4,000,000, more preferably 30,000 to 3,000,000, still more preferably 40,000 to 2,000,000, further preferably 40,000 to 1,000,000, particularly preferably 40,000 to 500,000.

The binder resin (A) has a glass transition temperature (Tg) of preferably 20°C or higher, more preferably 30°C or higher, still more preferably 40°C or higher and preferably 80°C or lower, more preferably 70°C or lower, still more preferably 60°C or lower, further preferably 50°C or lower. The Tg is preferably 20°C to 80°C, more preferably 30°C to 70°C, still more preferably 40°C to 60°C, further preferably 40°C to 50°C.

The glass transition temperature (Tg) can be measured using a differential scanning calorimeter (DSC), for example.

The binder rein (A) content in the slurry composition is not limited but is preferably 3% by weight or more, more preferably 4% by weight or more, still more preferably 5% by weight or more, further preferably 6% by weight or more and is preferably 30% by weight or less, more preferably 20% by weight or less, still more preferably 12% by weight or less. The binder resin (A) content is preferably 3 to 30% by weight, more preferably 4 to 20% by weight, still more preferably 5 to 12% by weight, further preferably 6 to 12% by weight.

The binder resin content within the above range enables production of a slurry composition that can be fired at low temperature.

The binder resin (A) preferably contains a (meth)acrylic resin.

The (meth)acrylic resin preferably contains a segment derived from a (meth)acrylate containing an ester substituent having a branched structure.

A (meth)acrylic resin mainly composed of a (meth)acrylate containing an ester substituent having a branched structure has a lower decomposition end temperature than a (meth)acrylic resin mainly composed of a (meth)acrylate having a linear ester substituent. A (meth)acrylic resin in an environment hotter than its ceiling temperature is depolymerized into monomers, but a (meth)acrylate containing an ester substituent having a branched structure is characteristically less likely to repolymerize, which leads to a low decomposition end temperature. A (meth)acrylic resin having the above structure thus has excellent low-temperature decomposability.

Examples of the (meth)acrylate containing an ester substituent having a branched structure include an alkyl (meth)acrylate containing a branched alkyl group and a polyalkylene glycol (meth)acrylate containing a branched alkylene glycol unit.

The ester substituent has a carbon number of preferably 3 or greater, more preferably 4 or greater and preferably 20 or less, more preferably 15 or less, still more preferably 12 or less, for example 10 or less. The ester substituent has a carbon number of preferably 3 to 20, more preferably 4 to 15, still more preferably 4 to 12, further preferably 4 to 10.

Examples of the alkyl (meth)acrylate containing a branched alkyl group include isopropyl (meth)acrylate, isobutyl (meth)acrylate, s-butyl (meth)acrylate, t-butyl (meth)acrylate, isopentyl (meth)acrylate, isohexyl (meth)acrylate, 2-ethylhexyl (meth)acrylate, isooctyl (meth)acrylate, isononyl (meth)acrylate, and isodecyl (meth)acrylate.

Preferred among these are isopropyl (meth)acrylate, isobutyl (meth)acrylate, s-butyl (meth)acrylate, 2-ethylhexyl (meth)acrylate, and isodecyl (meth)acrylate. More preferred are isopropyl methacrylate, isobutyl methacrylate, s-butyl methacrylate, 2-ethylhexyl methacrylate, and isodecyl methacrylate. Still more preferred are isobutyl methacrylate and 2-ethylhexyl methacrylate.

Examples of the polyalkylene glycol (meth)acrylate containing a branched alkylene glycol unit include those containing a propylene glycol unit. The polyalkylene glycol (meth)acrylate containing a branched alkylene glycol unit may have an alkoxy group at an end. Examples of the alkoxy group include a methoxy group, an ethoxy group, and a butoxy group.

The polyalkylene glycol (meth)acrylate containing a branched alkylene glycol unit preferably contains 3 or more, more preferably 4 or more and preferably 10 or fewer, more preferably 8 or fewer alkylene glycol units. The polyalkylene glycol (meth)acrylate containing a branched alkylene glycol unit preferably contains 3 to 10, more preferably 4 to 8 alkylene glycol units.

The amount of the segment derived from a (meth)acrylate containing an ester substituent having a branched structure is preferably 50% by weight or more in the (meth)acrylic resin.

The segment in an amount within the above range allows the slurry composition to have better low-temperature decomposability.

The amount of the segment derived from a (meth)acrylate containing an ester substituent having a branched structure is more preferably 60% by weight or more, still more preferably 70% by weight or more and is preferably 100% by weight or less, more preferably 90% by weight or less. The amount of the segment derived from a (meth)acrylate containing an ester substituent having a branched structure is preferably 50 to 100% by weight, more preferably 60 to 100% by weight, still more preferably 70 to 90% by weight.

The amount can be measured by pyrolysis GC-MS, for example.

The (meth)acrylic resin preferably contains a segment derived from a (meth)acrylate containing an ester substituent having a carbon number of 4 or greater and having a branched structure.

A (meth)acrylic resin having the above structure allows the slurry composition to have better low-temperature decomposability.

The (meth)acrylic resin preferably contains at least one selected from the group consisting of a segment derived from isobutyl methacrylate, a segment derived from 2-ethylhexyl methacrylate, a segment derived from isodecyl methacrylate, and a segment derived from isononyl methacrylate, as a segment derived from a (meth)acrylate containing an ester substituent having a branched structure.

A (meth)acrylic resin having the above structure allows the slurry composition to have better low-temperature decomposability.

The amount of the segment derived from a (meth)acrylate containing an ester substituent having a carbon number of 4 or greater and having a branched structure in the (meth)acrylic resin is preferably 50% by weight or more.

The segment in an amount within the above range allows the slurry composition to have better low-temperature decomposability.

The amount of the segment derived from a (meth)acrylate containing an ester substituent having a carbon number of 4 or greater and having a branched structure is more preferably 60% by weight or more, still more preferably 70% by weight or more, and is for example 100% by weight or less, preferably 90% by weight or less, more preferably 80% by weight or less. The amount of the segment derived from a (meth)acrylate containing an ester substituent having a carbon number of 4 or greater and having a branched structure is preferably 50 to 100% by weight, more preferably 60 to 90% by weight, still more preferably 70 to 80% by weight.

The (meth)acrylic resin may further contain other segments such as a segment derived from a (meth)acrylate containing a linear ester substituent or a segment derived from a (meth)acrylate containing a cyclic ester substituent.

A (meth)acrylic resin having the above structure can enhance coating film strength.

Examples of the (meth)acrylate containing a linear ester substituent include an alkyl (meth)acrylate containing a linear alkyl group and a polyalkylene glycol (meth)acrylate containing a linear alkylene glycol unit.

The ester substituent has a carbon number of preferably 1 or greater, more preferably 2 or greater and preferably 10 or less, more preferably 6 or less. The ester substituent has a carbon number of preferably 1 to 10, more preferably 2 to 6.

Examples of the alkyl (meth)acrylate containing a linear alkyl group include methyl (meth)acrylate, ethyl (meth)acrylate, n-propyl (meth)acrylate, n-butyl (meth)acrylate, n-pentyl (meth)acrylate, and n-hexyl (meth)acrylate. Preferred among these are methyl (meth)acrylate, ethyl (meth)acrylate, and n-butyl (meth)acrylate. More preferred are methyl methacrylate, ethyl methacrylate, and n-butyl methacrylate. The (meth)acrylic resin preferably further contains a segment derived from n-butyl methacrylate to allow the slurry composition to have better low-temperature decomposability.

Examples of the polyalkylene glycol (meth)acrylate containing a linear alkylene glycol unit include those containing an ethylene glycol unit and those containing a trimethylene glycol unit. The polyalkylene glycol (meth)acrylate containing a linear alkylene glycol unit may have an alkoxy group at an end. Examples of the alkoxy group include a methoxy group, an ethoxy group, and a butoxy group. The alkoxy group is not branched. Preferred among these are polyalkylene glycol (meth)acrylates containing an ethylene glycol unit. More preferred is methoxypolyethylene glycol (meth)acrylate.

The polyalkylene glycol (meth)acrylate containing a linear alkylene glycol unit preferably contains 4 or more, more preferably 10 or more and preferably 23 or fewer, more preferably 20 or fewer alkylene glycol units. The polyalkylene glycol(meth)acrylate containing a linear alkylene glycol unit preferably contains 4 to 23, more preferably 10 to 20 alkylene glycol units.

Examples of the (meth)acrylate containing a cyclic ester substituent include (meth)acrylates containing a cyclic alkyl group such as cyclohexyl (meth)acrylate and isobornyl (meth)acrylate and (meth)acrylates containing a glycidyl group such as glycidyl (meth)acrylate, 4-hydroxybutyl (meth)acrylate glycidyl ether, and 3,4-epoxycyclohexylmethyl (meth)acrylate.

The (meth)acrylic resin is particularly preferably produced using an oxygen-rich monomer. Since polyalkylene glycol (meth)acrylates containing a linear polyalkylene glycol unit have high oxygen contents, the (meth)acrylic resin preferably contains a segment derived from such a (meth)acrylate.

Depolymerization of a (meth)acrylic resin is an endothermic reaction. The heat necessary for decomposition tends not to be obtained in low-temperature decomposition. A (meth)acrylic resin containing the above segment derived from an oxygen-rich monomer can decompose by combustion using its own oxygen at a temperature around its ceiling temperature even in a nitrogen atmosphere. Such a (meth)acrylic resin thus can have higher low-temperature decomposability.

The polyalkylene glycol (meth)acrylate containing a linear alkylene glycol unit has an oxygen percentage of preferably 30% by weight or more, more preferably 35% by weight or more.

The amount of the segment derived from a (meth)acrylate containing a linear ester substituent in the (meth)acrylic resin is for example 0% by weight or more, preferably 1% by weight or more, more preferably 5% by weight or more, still more preferably 10% by weight or more and is preferably 40% by weight or less, more preferably 30% by weight or less. The amount of the segment derived from a (meth)acrylate containing a linear ester substituent is preferably 0 to 40% by weight, more preferably 1 to 30% by weight, still more preferably 5 to 30% by weight, further preferably 10 to 30% by weight.

The segment in an amount within the above range can improve handling properties such as printability.

The amount can be measured by pyrolysis GC-MS, for example.

In the (meth)acrylic resin, the total amount of the segment derived from isobutyl methacrylate, the segment derived from n-butyl methacrylate, and the segment derived from 2-ethylhexyl methacrylate is preferably 70% by weight or more.

A (meth)acrylic resin satisfying the above structure allows the slurry composition to have better low-temperature decomposability.

The total amount is more preferably 75% by weight or more, still more preferably 80% by weight or more. The upper limit thereof is not limited and may be for example 100% by weight or less, more preferably 90% by weight or less. The total amount is preferably 70 to 100% by weight, more preferably 75 to 90% by weight, still more preferably 80 to 90% by weight.

The amount can be measured by pyrolysis GC-MS, for example.

The (meth)acrylic resin may have a segment derived from a (meth)acrylate containing a glycidyl group, a carboxy group, or a hydroxy group.

Examples of the (meth)acrylate containing a glycidyl group include glycidyl (meth)acrylate, 4-hydroxybutyl acrylate glycidyl ether, and 3,4-epoxycyclohexylmethyl methacrylate.

Examples of the (meth)acrylate containing a hydroxy group or a carboxy group include 2-hydroxyethyl (meth)acrylate, hydroxypropyl (meth)acrylate, hydroxybutyl (meth)acrylate, and (meth)acrylic acid.

The amount of the segment derived from a (meth)acrylate containing a glycidyl group, a carboxy group, or a hydroxy group in the (meth)acrylic resin is preferably 1% by weight or more, more preferably 4% by weight or more and is preferably 10% by weight or less, more preferably 7% by weight or less. The amount of the segment derived from a (meth)acrylate containing a glycidyl group, a carboxy group, or a hydroxy group is preferably 1 to 10% by weight, more preferably 4 to 7% by weight.

The segment in an amount within the range can further enhance the low-temperature decomposability and improve the toughness of the resulting inorganic-particle-dispersed sheet.

The (meth)acrylic resin has a weight average molecular weight (Mw) of preferably 20,000 or greater and preferably 4,000,000 or less.

A Mw of 20,000 or greater prevents the slurry composition from having too low a viscosity and can lead to good dispersibility of the inorganic particles. A Mw of 4,000,000 or less can enhance coating film strength and allows the slurry composition to have sufficiently high viscosity, leading to improved storage stability and excellent printability.

The Mw is preferably 30,000 or greater, more preferably 40,000 or greater and is preferably 3,000,000 or less, more preferably 2,000,000 or less, still more preferably 1,000,000 or less, further preferably 500,000 or less. The Mw is preferably 20,000 to 4,000,000, more preferably 30,000 to 3,000,000, still more preferably 40,000 to 2,000,000, further preferably 40,000 to 1,000,000, particularly preferably 40,000 to 500,000.

The (meth)acrylic resin typically has a ratio (Mw/Mn) of weight average molecular weight (Mw) to number average molecular weight (Mn) of 1 or greater, preferably 1.5 or greater, more preferably 2 or greater and preferably 5 or less, more preferably 3 or less. The Mw/Mn is preferably 1 to 5, more preferably 1.5 to 3, still more preferably 2 to 3.

With a Mw/Mn within the above range, the (meth)acrylic resin contains an appropriate amount of components having low degrees of polymerization, so that the slurry composition can have a viscosity in a suitable range, leading to high productivity.

The weight average molecular weight (Mw) and the number average molecular weight (Mn) are average molecular weights in terms of polystyrene. The Mw and Mn can be measured by GPC measurement using a column LF-804 (available from Showa Denko K.K.), for example.

The (meth)acrylic resin has a glass transition temperature (Tg) of preferably 20°C or higher, more preferably 30°C or higher, still more preferably 40°C or higher, and preferably 80°C or lower, more preferably 70°C or lower, still more preferably 60°C or lower, further preferably 50°C or lower. The Tg is preferably 20°C to 80°C, more preferably 30°C to 70°C, still more preferably 40°C to 60°C, further preferably 40°C to 50°C.

The glass transition temperature (Tg) can be measured using a differential scanning calorimeter (DSC), for example.

The (meth)acrylic resin content in the binder resin (A) is preferably 10% by weight or more and is preferably 100% by weight or less, more preferably 40% by weight or more, more preferably 50% by weight or less.

The (meth)acrylic resin content in the slurry composition is not limited but is preferably 3% by weight or more, more preferably 4% by weight or more, still more preferably 5% by weight or more, further preferably 6% by weight or more and is preferably 30% by weight or less, more preferably 20% by weight or less, still more preferably 12% by weight or less. The (meth)acrylic resin content is preferably 3 to 30% by weight, more preferably 4 to 20% by weight, still more preferably 5 to 12% by weight, further preferably 6 to 12% by weight.

The (meth)acrylic resin content within the above range enables production of a slurry composition that can be fired at low temperature.

The (meth)acrylic resin may be produced using any method. For example, first, an organic solvent or the like is added to a raw material monomer mixture containing monomers such as the (meth)acrylate containing an ester substituent having a branched structure, whereby a monomer mixture solution is prepared. Subsequently, a polymerization initiator is added to the obtained monomer mixture solution to cause polymerization, whereby the (meth)acrylic resin is produced.

The polymerization may be performed using any method such as emulsion polymerization, suspension polymerization, bulk polymerization, interfacial polymerization, and solution polymerization. Preferred among these is solution polymerization.

Examples of the polymerization initiator include dilauryl peroxide, p-menthane hydroperoxide, diisopropylbenzene hydroperoxide, 1,1,3,3-tetramethylbutyl hydroperoxide, cumene hydroxyperoxide, t-butyl hydroxyperoxide, cyclohexanone peroxide, disuccinic acid peroxide, potassium persulfate, and ammonium persulphate.

Examples of commercial products of these include PERMENTA H, PERCUMYL P, PEROCTA H, PERCUMYL H-80, PEROYL 355, PERBUTYL H-69, PERHEXA H, PEROYL SA, and PEROYL L (all available from NOF Corporation), and Trigonox 27 and Trigonox 421 (all available from Nouryon).

### <Inorganic particles (B)>

The slurry composition contains inorganic particles.

Examples of the inorganic particles include ceramic powder, glass powder, phosphor particles, silicon oxide, and metal particles.

Examples of the ceramic powder include alumina, ferrite, zirconia, zircon, barium zirconate, calcium zirconate, titanium oxide, barium titanate, strontium titanate, calcium titanate, magnesium titanate, zinc titanate, lanthanum titanate, neodymium titanate, lead zirconate titanate, alumina nitride, silicon nitride, boron nitride, gallium nitride, boron carbide, barium stannate, calcium stannate, magnesium silicate, mullite, steatite, cordierite, and forsterite.

Usable ceramic powders also include ITO, FTO, niobium oxide, vanadium oxide, tungsten oxide, lanthanum strontium manganite, lanthanum strontium cobalt ferrite, yttrium-stabilized zirconia, gadolinium-doped ceria, nickel oxide, lanthanum chromite, Sm₂Fe₁₇N₃, Nd₂Fe₁₄B, MnAlC, L₁₀FeNi, La_{2/3-x}Li₃ₓTiO₃, La_{(1-x)/3}LiₓNbO₃, LaGaO₃, LaScO₃, CaZrO₃, (La_{0.875}Sr_{0.125})MnO₃, PbZrTiO₃, SrBi₂Ta₂O₉, BiFeO₃, KNbO₃, PbVO₃, BiCo₃, and Bi(Zn_{1/2}Ti_{1/2})₃.

When containing the ceramic powder, the slurry composition can be suitably used as a slurry composition for ceramic green sheets.

Examples of the glass powder include powders of glass such as bismuth oxide glass, silicate glass, lead glass, zinc glass, or boron glass, and various silicon oxide glass powders such as CaO-Al₂O₃-SiO₂ glass powder, MgO-Al₂O₃-SiO₂ glass powder, and LiO₂-Al₂O₃-SiO₂ glass powder.

Usable glass powders include SnO-B₂O₃-P₂O₅-Al₂O₃ mixtures, PbO-B₂O₃-SiO₂ mixtures, BaO-ZnO-B₂O₃-SiO₂ mixtures, ZnO-Bi₂O₃-B₂O₃-SiO₂ mixtures, Bi₂O₃-B₂O₃-BaO-CuO mixtures, Bi₂O₃-ZnO-B₂O₃-Al₂O₃-SrO mixtures, ZnO-Bi₂O₃-B₂O₃ mixtures, Bi₂O₃-SiO₂ mixtures, P₂O₅-Na₂O-CaO-BaO-Al₂O₃-B₂O₃ mixtures, P₂O₅-SnO mixtures, P₂O₅-SnO-B₂O₃ mixtures, P₂O₅-SnO-SiO₂ mixtures, CuO-P₂O₅-RO mixtures, SiO₂-B₂O₃-ZnO-Na₂O-Li₂O-NaF-V₂O₅ mixtures, P₂O₅-ZnO-SnO-R₂O-RO mixtures, B₂O₃-SiO₂-ZnO mixtures, B₂O₃-SiO₂-Al₂O₃-ZrO₂ mixtures, SiO₂-B₂O₃-ZnO-R₂O-RO mixtures, SiO₂-B₂O₃-Al₂O₃-RO-R₂O mixtures, SrO-ZnO-P₂O₅ mixtures, SrO-ZnO-P₂O₅ mixtures, and BaO-ZnO-B₂O₃-SiO₂ mixtures. R represents an element selected from the group consisting of Zn, Ba, Ca, Mg, Sr, Sn, Ni, Fe, and Mn.

Particularly preferred are PbO-B₂O₃-SiO₂ mixture glass powders and lead-free glass powders such as BaO-ZnO-B₂O₃-SiO₂ mixtures or ZnO-Bi₂O₃-B₂O₃-SiO₂ mixtures.

When the inorganic particles contain lithium, the slurry composition can be suitably used as an electrolyte slurry composition for all-solid-state lithium ion batteries. Specific examples of the lithium-containing inorganic particles include low-melting-point glass such as LiO₂·Al₂O₃·SiO₂ inorganic glass, lithium sulfur glass such as Li₂S-MxSy (M = B, Si, Ge, or P), lithium cobalt complex oxides such as LiCoO₂, lithium manganese complex oxides such as LiMnO₄, lithium nickel complex oxides, lithium vanadium complex oxides, lithium zirconium complex oxides, lithium hafnium complex oxides, lithium silicophosphate (Li_{3.5}Si_{0.5}P_{0.5}O₄), titanium lithium phosphate (LiTi₂(PO₄)₃), lithium titanate (Li₄Ti₅O₁₂), Li_{4/3}Ti_{5/3}O₄, germanium lithium phosphate (LiGe₂(PO₄)₃), Li₂-SiS glass, Li₄GeS₄-Li₃PS₄ glass, LiSiO₃, LiMn₂O₄, Li₂S-P₂S₅ glass/ceramics, Li₂O-SiO₂, Li₂O-V₂O₅-SiO₂, LiS-SiS₂-Li₄SiO₄ glass, ion conductive oxides such as LiPON, lithium oxide compounds such as Li₂O-P₂O₅-B₂O₃ and Li₂O-GeO₂Ba, LixAlyTiz(PO₄)₃ glass, LaxLiyTiOz glass, LixGeyPzO₄ glass, Li₇La₃Zr₂O₁₂ glass, LivSiwPxSyClz glass, lithium niobium oxides such as LiNbO₃, lithium alumina compounds such as Li-β-alumina, and lithium zinc oxides such as Li₁₄Zn(GeO₄)₄.

Any phosphor particles may be used. For example, the phosphor may be a blue phosphor, a red phosphor, or a green phosphor conventionally known as a phosphor for displays. Examples of the blue phosphor include MgAl₁₀O₁₇:Eu phosphors, Y₂SiO₅:Ce phosphors, CaWO₄:Pb phosphors, BaMgAl₁₄O₂₃:Eu phosphors, BaMgAl₁₆O₂₇:Eu phosphors, BaMg₂Al₁₄O₂₃:Eu phosphors, BaMg₂Al₁₄O₂₇:Eu phosphors, and ZnS: (Ag,Cd) phosphors. Examples of the red phosphor include Y₂O₃:Eu phosphors, Y₂SiO₅:Eu phosphors, Y₃Al₅O₁₂:Eu phosphors, Zn₃(PO₄)₂:Mn phosphors, YBO₃:Eu phosphors, (Y,Gd)BO₃:Eu phosphors, GdBO₃:Eu phosphors, ScBO₃:Eu phosphors, and LuBO₃:Eu phosphors. Examples of the green phosphor include Zn₂SiO₄:Mn phosphors, BaAl₁₂O₁₉:Mn phosphors, SrAl₁₃O₁₉:Mn phosphors, CaAl₁₂O₁₉:Mn phosphors, YBO₃:Tb phosphors, BaMgAl₁₄O₂₃:Mn phosphors, LuBO₃:Tb phosphors, GdBO₃:Tb phosphors, ScBO₃:Tb phosphors, and Sr₆Si₃O₃Cl₄:Eu phosphors. Other usable phosphors include ZnO:Zn phosphors, ZnS: (Cu,Al) phosphors, ZnS:Ag phosphors, Y₂O₂S:Eu phosphors, ZnS:Zn phosphors, (Y,Cd)BO₃:Eu phosphors, and BaMgAl₁₂O₂₃:Eu phosphors.

Any metal particles may be used. Examples thereof include powders of iron, copper, nickel, palladium, platinum, gold, silver, aluminum, and tungsten, and alloys thereof.

Metals such as copper and iron, which have good adsorption properties with a carboxy group, an amino group, an amide group, or the like and are easily oxidized, can also be suitably used. Each of these metal powders may be used alone, or two or more of them may be used in combination.

Metal complexes, various carbon blacks and carbon nanotubes, or the like may also be used.

The inorganic particles have an average particle size of preferably 0.1 µm or greater, more preferably 0.5 µm or greater and preferably 100 µm or less, more preferably 50 µm or less. The average particle size is preferably 0.1 to 100 µm, more preferably 0.5 to 50 µm.

An average particle size within the above range prevents the inorganic particles from having too large a specific surface area, so that a dense formed article can be obtained by firing.

The average particle size of the inorganic particles can be measured, for example, by a method of observing the particles using a transmission electron microscope or a light scattering method using a dispersion.

The inorganic particle content in the slurry composition is not limited but is preferably 40% by weight or more and preferably 90% by weight or less. The inorganic particles content within the above range can sufficiently enhance the density of the inorganic particles. The inorganic particle content within the above range can also sufficiently enhance the dispersibility of the inorganic particles and improve the formability of the slurry composition. The inorganic particle content is preferably 40 to 90% by weight.

### <Solvent (C)>

The slurry composition contains a solvent.

The solvent is not limited but preferably one excellent in properties such as application properties, drying properties, or dispersibility of inorganic particles in the production of an inorganic-particle-dispersed sheet.

Examples of the solvent include alcohols such as aliphatic alcohols, glycols, terpene alcohols, and aromatic alcohols, aromatic hydrocarbons, esters, ketones, and N-methylpyrrolidone.

Examples of the aliphatic alcohols include ethanol and isopropanol.

Examples of the glycols include ethylene glycol monobutyl ether, diethylene glycol monoethyl ether, diethylene glycol monomethyl ether, diethylene glycol monoisobutyl ether, butyl carbitol, ethylene glycol monoethyl ether acetate, trimethyl pentanediol monoisobutyrate, butyl carbitol acetate, texanol, ethylene glycol monophenyl ether, propylene glycol monophenyl ether, ethylene glycol ethyl ether, and ethyl carbitol acetate.

Examples of the terpene alcohols include terpineol, dihydroterpineol, terpineol acetate, and dihydroterpineol acetate.

Examples of the aromatic alcohols include benzyl alcohol, ethylene glycol monophenyl ether, propylene glycol monophenyl ether, and cresol.

Examples of the aromatic hydrocarbons include toluene.

Examples of the esters include ethyl acetate, butyl acetate, hexyl acetate, isoamyl acetate, butyl butyrate, methoxybutyl acetate, butyl lactate, dioctyl phthalate, and dioctyl adipate.

Examples of the ketones include methyl ethyl ketone, methyl isobutyl ketone, and isophorone.

Preferred among these are butyl acetate, hexyl acetate, butyl butyrate, isoamyl acetate, methoxybutyl acetate, ethyl carbitol acetate, terpineol, terpineol acetate, dihydroterpineol, dihydroterpineol acetate, diethylene glycol monoethyl ether, diethylene glycol monomethyl ether, diethylene glycol monoisobutyl ether, butyl carbitol, butyl carbitol acetate, and texanol. More preferred are butyl acetate, hexyl acetate, terpineol, and ethyl carbitol acetate. Still more preferred are butyl acetate, terpineol, and benzyl alcohol.

Each of these organic solvents may be used alone, or two or more of them may be used in combination. In an embodiment of the present invention, organic solvents are different from the binder removal aid.

The solvent has a boiling point of preferably 90°C or higher and preferably 230°C or lower, more preferably 120°C or higher and more preferably 210°C or lower. The boiling point is preferably 90°C to 230°C, more preferably 120°C to 210°C.

With a boiling point within the above range, the solvent does not evaporate too fast, and can be easily removed by drying in a fan oven or the like. Moreover, the printability can be improved, leading to a coating article with a smooth surface.

The solvent content in the slurry composition is preferably 10% by weight or more and preferably 60% by weight or less, more preferably 20% by weight or more and more preferably 50% by weight or less.

The solvent content within the above range can further improve the application properties and the dispersibility of the inorganic particles. The solvent content is preferably 10 to 60% by weight, more preferably 20 to 50% by weight.

### <Binder removal aid (D)>

The slurry composition contains a binder removal aid.

The binder removal aid contains a carboxylic anhydride having a boiling point of 200°C or higher and an oxygen atom content of 40% by weight or more.

The binder removal aid has a high oxygen atom content in the molecule and combusts consuming its own oxygen even under a nitrogen atmosphere. The binder removal aid when mixed with the binder resin assists the pyrolysis of the binder resin. Thus, the binder removal aid can promote the binder removal treatment and significantly reduce sintering residues without increasing the oxygen partial pressure, and can also suppress the oxidation of the inorganic particles, enabling the manufacture of a highly reliable electronic component.

The oxygen atom content in the carboxylic anhydride is 40% by weight or more, preferably 45% by weight or more, more preferably 48% by weight or more, from the standpoint of the binder removal properties and the suppression of oxidation of the inorganic particles. The oxygen atom content is preferably 55% by weight or less, preferably 50% by weight or less, from the standpoint of the solubility in the solvent. The oxygen atom content is preferably 40 to 55% by weight, more preferably 45 to 50% by weight, still more preferably 48 to 50% by weight.

The oxygen atom content is an oxygen atom content per molecule and can be calculated based on the molecular weight of the binder removal aid and the atomic weight of oxygen. The oxygen atom content can be calculated with the atomic weight of carbon taken as 12, the atomic weight of hydrogen taken as 1, and the atomic weight of oxygen taken as 16.

The carboxylic anhydride has a boiling point of 200°C or higher.

Such a boiling point prevents the carboxylic anhydride from evaporating together with the solvent when the slurry composition is applied and dried, so that the binder removal aid can exhibit the effect of promoting the binder removal treatment.

The boiling point is preferably 390°C or lower, more preferably 250°C or higher and more preferably 370°C or lower, still more preferably 270°C or higher and still more preferably 350°C or lower. The boiling point is preferably 200°C to 390°C, more preferably 250°C to 370°C, still more preferably 270°C to 350°C.

A carboxylic anhydride having a boiling point of 270°C or higher functions as a plasticizer. Using such a carboxylic anhydride as a binder removal aid can reduce the amount of plasticizer to be added.

Here, since the carboxylic anhydride starts to combust below 200°C in an air atmosphere, the boiling point is preferably measured under reduced pressure. The conversion of the boiling point under reduced pressure can be performed by the method described in Science of Petroleum, Vol. II. p. 1281 (1938), for example.

Examples of the carboxylic anhydride include anhydrides of succinic acid, maleic acid, citric acid, glutaric acid, diglycolic acid, methoxyacetic acid, itaconic acid, citraconic acid, trimellitic acid, cyclobutanetetracarboxylic acid, tricarballylic acid, butanetetracarboxylic acid, cyclopentanetetracarboxylic acid, and malonic acid.

Preferred among these are anhydrides of succinic acid, maleic acid, citric acid, glutaric acid, diglycolic acid, methoxyacetic acid, itaconic acid, citraconic acid, trimellitic acid, cyclobutanetetracarboxylic acid, tricarballylic acid, butanetetracarboxylic acid, and cyclopentanetetracarboxylic acid. More preferred are anhydrides of succinic acid, maleic acid, citric acid, diglycolic acid, and methoxyacetic acid.

Each of the carboxylic anhydrides may be used alone, or two or more thereof may be used in combination.

The use of the carboxylic anhydride as the binder removal aid makes it possible to promote the binder removal treatment and significantly reduce sintering residues without increasing the oxygen partial pressure, and can also suppress the oxidation of the inorganic particles, leading to the manufacture of a highly reliable electronic component.

Specific examples of the carboxylic anhydride include succinic anhydride (boiling point 261°C, oxygen content 48.0% by weight), maleic anhydride (boiling point 202°C, oxygen content 49.0% by weight), citric anhydride (boiling point 520°C, oxygen content 55.2% by weight), glutaric anhydride (boiling point 283°C, oxygen content 42.1% by weight), diglycolic anhydride (boiling point 240°C, oxygen content 55.2% by weight), itaconic anhydride (boiling point 232°C, oxygen content 42.9% by weight), citraconic anhydride (boiling point 213°C, oxygen content 42.9% by weight), trimellitic anhydride (boiling point 393°C, oxygen content 41.7% by weight), 1,2,3,4-cyclobutanetetracarboxylic dianhydride (boiling point 545°C, oxygen content 49.0% by weight), 2-methoxyacetic anhydride (boiling point 215°C, oxygen content 49.4% by weight), tricarballylic anhydride (boiling point 390°C, oxygen content 50.6% by weight), 1,2,3,4-butanetetracarboxylic dianhydride (boiling point 492°C, oxygen content 48.5% by weight), 1,2,3,4-cyclopentanetetracarboxylic dianhydride (boiling point 527°C, oxygen content 45.7% by weight), and malonic anhydride (oxygen content 55.8% by weight).

Preferred among these are succinic anhydride, maleic anhydride, citric anhydride, diglycolic anhydride, itaconic anhydride, citraconic anhydride, trimellitic anhydride 1,2,3,4-cyclobutanetetracarboxylic dianhydride, 2-methoxyacetic anhydride, tricarballylic anhydride, 1,2,3,4-butanetetracarboxylic dianhydride, and 1,2,3,4-cyclopentanetetracarboxylic dianhydride because they have the advantages of high oxygen contents and high boiling points. More preferred are succinic anhydride, maleic anhydride, citric anhydride, diglycolic anhydride, and 2-methoxyacetic anhydride.

The carboxylic anhydride content in the slurry composition is preferably 0.1% by weight or more and preferably 15% by weight or less, more preferably 0.2% by weight or more and more preferably 10% by weight or less, still more preferably 0.4% by weight or more and still more preferably 5% by weight or less. The carboxylic anhydride content within the above range can sufficiently enhance the binder removal effect while preventing precipitation of the binder removal aid into the slurry composition, leading to excellent printability. The carboxylic anhydride content is preferably 0.1 to 15% by weight, more preferably 0.2 to 10% by weight, still more preferably 0.4 to 5% by weight.

The carboxylic anhydride content in the slurry composition is preferably 5 parts by weight or more and preferably 30 parts by weight or less relative to 100 parts by weight of the binder resin (A).

The carboxylic anhydride content within the above range can sufficiently enhance the binder removal effect while preventing precipitation of the binder removal aid into the slurry composition, leading to excellent printability.

The carboxylic anhydride content is preferably 8 parts by weight or more and preferably 25 parts by weight or less, more preferably 10 parts by weight or more and more preferably 20 parts by weight or less. The carboxylic anhydride content is preferably 5 to 30 parts by weight, more preferably 8 to 25 parts by weight, still more preferably 10 to 20 parts by weight relative to 100 parts by weight of the binder resin (A).

The binder removal aid (D) may contain another binder removal aid in addition to the carboxylic anhydride, such as an inorganic oxide (e.g., borosilicate glass).

The binder removal aid (D) content in the slurry composition is preferably 0.1% by weight or more and preferably 15% by weight or less, more preferably 0.2% by weight or more and more preferably 10% by weight or less, still more preferably 0.4% by weight or more and still more preferably 5% by weight or less. The binder removal aid (D) content is preferably 0.1 to 15% by weight, more preferably 0.2 to 10% by weight, still more preferably 0.4 to 5% by weight. The binder removal aid (D) content within the above range can sufficiently enhance the binder removal effect while preventing precipitation of the binder removal aid into the slurry composition, leading to excellent printability.

The binder removal aid (D) content in the slurry composition is preferably 5 parts by weight or more and preferably 30 parts by weight or less relative to 100 parts by weight of the binder resin (A).

The binder removal aid (D) content within the above range can sufficiently enhance the binder removal effect while preventing precipitation of the binder removal aid into the slurry composition, leading to excellent printability.

The carboxylic anhydride content is preferably 8 parts by weight or more and preferably 25 parts by weight or less, more preferably 10 parts by weight or more and more preferably 20 parts by weight or less relative to 100 parts by weight of the (meth)acrylic resin. The carboxylic anhydride content is preferably 5 to 30 parts by weight, more preferably 8 to 25 parts by weight, still more preferably 10 to 20 parts by weight relative to 100 parts by weight of the (meth)acrylic resin.

### (Other additives)

The slurry composition may contain other additives such as plasticizers, surfactants, or dispersants, in addition to the binder resin (A), the inorganic particles (B), the solvent (C), and the binder removal aid (D) containing the carboxylic anhydride.

Examples of the plasticizers include di(butoxyethyl) adipate, dibutoxyethoxyethyl adipate, triethylene glycol dibutyl ether, triethylene glycol bis(2-ethylhexanoate), triethylene glycol dihexanoate, acetyl tributyl citrate, acetyl diethyl citrate, acetyl dibutyl citrate, dibutyl sebacate, triacetin, diethyl acetyloxymalonate, and diethyl etoxymalonate.

Using these plasticizers can reduce the amount of plasticizer to be added as compared with using conventional plasticizers.

The plasticizer differs from the binder removal aid.

The plasticizer is preferably a non-aromatic plasticizer because plasticizers having an aromatic ring such as a benzene ring tend to generate soot by combustion. The plasticizer more preferably contains a component derived from adipic acid, triethylene glycol, or citric acid.

The plasticizer preferably contains an alkyl group having a carbon number of 2 or greater, such as an ethyl group or a butyl group, more preferably an alkyl group having a carbon number of 4 or greater.

The presence of the alkyl group having a carbon number of 2 or greater can suppress moisture absorption into the plasticizer, thus preventing defects such as voids or blisters in the resulting inorganic-particle-dispersed sheet. In particular, the alkyl group in the plasticizer is preferably at a molecule end.

A plasticizer containing a substituent having a carbon number of 2, such as an ethyl group, at a molecule end is well compatible with a segment derived from ethyl methacrylate. A plasticizer containing a substituent having a carbon number of 4, such as a butyl group, at a molecule end is well compatible with a segment derived from butyl methacrylate. Such plasticizers are well compatible with the above-described (meth)acrylic resin and can improve the brittleness of the resin. A plasticizer containing a butoxyethyl group is preferred because it is well compatible with both the segment derived from ethyl methacrylate and the segment derived from butyl methacrylate.

The plasticizer preferably has a carbon:oxygen ratio of 5:1 to 3:1.

The carbon:oxygen ratio within the above range can improve the combustibility of the plasticizer and prevent the generation of residual carbon. Moreover, such a carbon:oxygen ratio can improve the compatibility of the plasticizer with the (meth)acrylic resin, so that even a small amount of the plasticizer can exhibit the plasticizing effect.

A high-boiling-point organic solvent with a propylene glycol skeleton or a trimethylene glycol skeleton can also be preferably used when the solvent contains an alkyl group having a carbon number of 4 or greater and has a carbon:oxygen ratio of 5:1 to 3:1.

The plasticizer has a boiling point of preferably 240°C or higher and preferably lower than 390°C.

A boiling point within the above range allows easy evaporation in the drying step, preventing the plasticizer from remaining in the formed article and also preventing generation of residual carbon.

The boiling point is a boiling point at normal pressure.

The plasticizer content in the slurry composition is not limited but is preferably 0.1% by weight or more and preferably 3.0% by weight or less. The plasticizer content is preferably 0.1 to 3.0% by weight.

The plasticizer content within the range can provide a balance between the sheet handleability and the sinterability.

Examples of the surfactants include a cationic surfactant, an anionic surfactant, and a nonionic surfactant.

The nonionic surfactant is not limited but is preferably one having a HLB value of 10 or greater and 20 or less. The "HLB value" herein is an index of the hydrophilicity and lipophilicity of a surfactant. Several calculation methods have been proposed. For example, the HLB value for an ester surfactant is defined by 20(1 - S/A), where S is the saponification value and A is the acid value of the fatty acid constituting the surfactant. Specifically, the nonionic surfactant is suitably a nonionic surfactant containing polyethylene oxide with an alkylene ether added to the aliphatic chain. Specific suitable examples include polyoxyethylene lauryl ether and polyoxyethylene cetyl ether. Although the nonionic surfactant has good thermal decomposability, adding a large amount of it may decrease the thermal decomposability of the inorganic-particle-dispersed slurry composition. The upper limit of the nonionic surfactant content is thus preferably 5% by weight.

Examples of suitable dispersants include fatty acids, aliphatic amines, alkanolamides, and phosphates. A silane coupling agent or the like may be added.

Non-limiting examples of the fatty acids include: saturated fatty acids such as behenic acid, stearic acid, palmitic acid, myristic acid, lauric acid, capric acid, caprylic acid, and coconut fatty acid; and unsaturated fatty acids such as oleic acid, linoleic acid, linolenic acid, sorbic acid, tallow fatty acid, and hydroxystearic acid. Preferred among these are lauric acid, stearic acid, and oleic acid.

Non-limiting examples of the aliphatic amines include laurylamine, myristylamine, cetylamine, stearylamine, oleylamine, (coco)alkylamine, (hydrogenated tallow) alkylamine, (tallow) alkylamine, and (soya) alkylamine. Non-limiting examples of the alkanolamides include coconut fatty acid diethanolamide, tallow fatty acid diethanolamide, lauric acid diethanolamide, and oleic acid diethanolamide.

Non-limiting examples of the phosphates include polyoxyethylene alkyl ether phosphates and polyoxyethylene alkyl allyl ether phosphates.

Since the slurry composition contains the carboxylic anhydride as the binder removal aid (D), the slurry composition preferably has a low moisture content, preferably 1% by weight or lower, more preferably 0.1% by weight or lower.

The moisture content may be reduced using any method such as vacuum deaeration or a molecular sieve method.

The slurry composition may have any viscosity. The lower limit of the viscosity measured at 20°C using a type B viscometer at a probe rotation rate of 5 rpm is preferably 0.1 Pa·s, and the upper limit thereof is preferably 100 Pa·s. The viscosity is preferably 0.1 to 100 Pa·s.

A viscosity of 0.1 Pa·s or higher allows the resulting inorganic-particle-dispersed sheet to maintain a predetermined shape after application using a method such as die-coat printing. A viscosity of 100 Pa·s or lower can prevent defects such as permanent die discharge marks, leading to excellent printability.

The slurry composition can be produced using any method such as a conventionally known stirring method. Specifically, for example, the slurry composition is produced by mixing and stirring the binder resin (A), the inorganic particles (B), the solvent (C), the binder removal aid (D) containing the carboxylic anhydride, and other optional additives using a triple roll mill.

The slurry composition can be used to produce an electronic component or a magnet such as a neodymium magnet.

Examples of the electronic component include die attach pastes (ACPs), die attach films (ACFs), via electrodes for TSVs and TGVs, various circuits of touch panels, RFIDs, and sensor boards, various die bonding materials, sealants of MEMS devices, and electrode materials of solar cells, multilayer ceramic capacitors, LTCC, silicon capacitors, all-solid-state batteries, and the like. The slurry composition can also be used in piezoelectric elements, inductors, sintered magnets, antimicrobial components, electromagnetic shielding materials, catalysts, and fluorescent materials, in addition to the above electrode circuit applications.

For example, the slurry composition is applied onto a substrate and dried to provide an inorganic-particle-dispersed formed article. The resulting inorganic-particle-dispersed formed article is heat-treated for binder removal treatment (debinding) and fired by heating to the sinter temperature of the inorganic particles, whereby an inorganic sintered article can be obtained.

The present invention also encompasses a method for producing an inorganic sintered article, including the steps of: drying the inorganic-particle-dispersed slurry composition to provide an inorganic-particle-dispersed formed article; and debinding the inorganic-particle-dispersed formed article at 300°C or lower.

The forming method for the inorganic-particle-dispersed slurry composition is not limited. The inorganic-particle-dispersed slurry composition may be formed into a coil shape by applying the slurry composition alternately to the upper and lower portions of substrates via a screen with a U-shaped opening, or may be directly printed onto a substrate to form a multilayer article, or applied to a substrate by dip coating. Use of a high-boiling-point solvent enables forming using a technique such as screen printing.

An inorganic-particle-dispersed sheet can be produced by applying the slurry composition to a support film with one release-treated surface and removing the solvent by drying to provide a sheet-shaped inorganic-particle-dispersed formed article.

The inorganic-particle-dispersed sheet preferably has a thickness of 1 to 20 µm.

The slurry composition may be applied using an application means such as a roll coater, a die coater, a squeeze coater, or a curtain coater.

The slurry composition may be dried by heat drying, for example.

The drying temperature is preferably 80°C or higher and preferably 130°C or lower.

The support film used in the production of the inorganic-particle-dispersed sheet is preferably a flexible resin film having heat resistance and solvent resistance. With a flexible support film, the inorganic-particle-dispersed slurry composition can be applied to a surface of the support film using a roll coater, a blade coater, or the like, and the resulting film having the inorganic particle-dispersed sheet thereon can be stored and supplied in the form of a roll.

The support film may be made of a resin such as polyethylene terephthalate, polyester, polyethylene, polypropylene, polystyrene, polyimide, polyvinyl alcohol, polyvinyl chloride, fluororesin (e.g., polyfluoroethylene), nylon, or cellulose.

The support film preferably has a thickness of 20 to 100 µm, for example.

The support film is preferably release-treated at a surface thereof. This allows easy separation of the support film in the transferring step.

An inorganic sintered article can be obtained by performing a debinding step, in which the inorganic-particle-dispersed formed article is heat-treated for binder removal treatment (debinding), and then performing a firing step, in which the article is heated to the sinter temperature of the inorganic particles.

The debinding step is preferably performed at 300°C or lower.

The use of the slurry composition enables binder removal treatment to sufficiently proceed even in a low-temperature environment at 300°C or lower.

The temperature is preferably 250°C or higher and preferably 280°C or lower.

The temperature is preferably held for 0.1 hour or longer and preferably 1 hour or shorter.

The temperature rise rate is preferably 20°C/min or higher and preferably 100°C/min or lower.

The debinding step is preferably performed under a nitrogen atmosphere when the inorganic particles are susceptible to degeneration due to oxygen in the air, and may be performed in an air atmosphere when the inorganic particles used are relatively stable to oxygen in the air. In an air atmosphere, binder removal treatment can proceed faster than in a nitrogen atmosphere, resulting in less firing residues remaining in the sintered article.

After the debinding step, a firing step is performed, in which the article is heated to the sinter temperature of the inorganic particles.

In this manner, an inorganic sintered article can be obtained.

The firing temperature is not limited because it is appropriately set depending on the type of the inorganic particles. For example, the firing temperature is 300°C or higher and 1,000°C or lower.

The temperature rise rate is preferably 20°C/min or higher and preferably 100°C/min or lower.

The firing step may be performed under a nitrogen atmosphere, an air atmosphere, vacuum, or a reducing atmosphere containing a slight amount of hydrogen gas.

When the slurry composition contains ceramic powder as the inorganic particles (B), a ceramic sintered article can be produced.

The ceramic sintered article may be a multilayer ceramic article or a single-layer ceramic article.

The multilayer ceramic article can be used in multilayer ceramic capacitors, multilayer ceramic substrates, all-solid-state batteries, and the like. The single-layer ceramic article can be used in circuit boards such as ceramic packages, low temperature co-fired ceramic (LTCC) circuit boards and alumina circuit boards, ceramic heat dissipation substrates such as aluminum nitride substrates and silicon nitride substrates, electrostatic chucks, ceramic columns, temperature sensors, piezoelectric elements, various machine components, and the like.

An all-solid-state battery can be produced by using the slurry composition and the inorganic-particle-dispersed sheet as the materials of the positive electrode, solid electrolyte, and negative electrode of the all-solid-state battery. A multilayer ceramic capacitor can be produced by using the slurry composition and the inorganic-particle-dispersed sheet as a dielectric green sheet and an electrode paste.

The all-solid-state battery is preferably produced using a method including the steps of: producing an inorganic-particle-dispersed sheet using the slurry composition; forming an electrode material layer slurry containing an electrode active material and a binder for an electrode active material layer into an electrode material sheet; stacking the electrode active material sheet and the inorganic-particle-dispersed sheet to produce a multilayer article; and firing the multilayer article.

The multilayer ceramic capacitor is preferably produced by a method including the steps of: producing inorganic-particle-dispersed sheets using the slurry composition; printing and drying a conductive paste on the inorganic-particle-dispersed sheets to produce dielectric sheets; and stacking the dielectric sheets.

The conductive paste contains conductive powder.

The conductive powder may be made of any conductive material. Examples of the material include nickel, palladium, indium, platinum, gold, silver, copper, and alloys thereof. Each of these conductive powders may be used alone, or two or more of them may be used in combination.

The conductive paste may be printed using any method. Examples of the method include screen printing, die-coat printing, offset printing, gravure printing, and ink-jet printing.

In the method for producing the multilayer ceramic capacitor, the dielectric sheets printed with the conductive paste and electrode layers are stacked to provide the multilayer ceramic capacitor.

An electronic component can be produced by firing a raw ceramic component to produce a fired ceramic component, the raw ceramic component being a stack of the inorganic-particle-dispersed sheet containing the binder removal aid and a conductive paste composition layer, and mounting an external electrode on the resulting fired ceramic component.

The firing conditions are not limited, but the firing is preferably performed in an inert gas atmosphere or a reducing gas atmosphere so as to prevent oxidation of the transition metal used in the electrode layers.

In the binder removal step and the inorganic particle firing step, holding may be performed at a temperature suited to the purpose.

In the binder removal step, holding may be performed at 250°C or higher and 350°C or lower for one hour to three hours in an inert gas atmosphere, whereby the amount of organic matter, such as the binder or the plasticizer, is reduced to 20% or lower, allowing transition to the inorganic particle firing step. In the inorganic particle firing step, the temperature is raised to 800°C to 1,300°C in an inert gas atmosphere or a reducing gas atmosphere, whereby the inorganic particles are sintered. The temperature rise rate is preferably 5°C/min or higher and 100°C/min or lower.

An external electrode is mounted on the fired ceramic component, whereby an electronic component can be produced.

The external electrode may have any composition and may be mounted using any method. Metal plating, thermosetting conductive resin, metal paste, and/or the like can be preferably used. The metal paste preferably contains a highly conductive metal that can be sintered at low temperature. Examples of such a metal include copper, nickel, silver, and palladium.

For example, when the slurry composition contains Nd₂Fe₁₄B as the inorganic particles (B), a neodymium magnet in which the decrease in magnetic force is suppressed can be produced by applying the slurry composition onto a ferrite magnet substrate, drying the slurry composition, applying magnetic field pressing, and firing at about 300°C while aligning the magnetic forces.

For example, when the slurry composition contains La_{2/3-x}Li₃ₓTiO₃ (LLTO) as the inorganic particles (B), an all-solid-state battery with high capacity can be produced by applying the slurry composition onto a negative electrode Li foil, drying the slurry composition, and bonding the negative electrode Li foil with a positive electrode sheet including LLTO as a positive electrode, acetylene black as a conductive aid, and lithium niobate as a positive electrode active material, and firing at about 300°C.

With a combined structure of a slurry composition containing barium titanate as the inorganic particles (B) and a slurry composition containing nickel particles as the inorganic particles (B), a multilayer ceramic capacitor can be produced.

With a combined structure of a slurry composition containing Ni-Zn-Cu ferrite as the inorganic particles (B) and a slurry composition containing copper particles as the inorganic particles (B), an inductor can be produced.

If the inorganic particles (B) are not sufficiently sintered by firing at about 300°C, a sintering aid such as borosilicate or phosphate may be added.

### - Advantageous Effects of Invention

The present invention can provide an inorganic-particle-dispersed slurry composition that has excellent storage stability and printability, can promote binder removal treatment even at low temperature, can suppress oxidation of inorganic particles, leaves less residual carbon after firing, has excellent sinterability, and can provide a highly reliable electronic component. The present invention can also provide a method for producing an inorganic sintered article using the slurry composition.

### DESCRIPTION OF EMBODIMENTS

The present invention is more specifically described in the following with reference to, but not limited to, examples.

<Production of (meth)acrylic resin>

### (Synthesis Example 1)

A 2-L separable flask equipped with a stirring device, a condenser, a thermometer, a water bath, and a nitrogen gas inlet was provided. The 2-L separable flask was charged with 50 parts by weight of isobutyl methacrylate (iBMA). Further, 50 parts by weight of n-butyl methacrylate (nBMA) was added. They were further mixed with 100 parts by weight of terpineol as an organic solvent to give a monomer mixture solution.

The monomer mixture solution was bubbled with nitrogen gas to remove dissolved oxygen therefrom, and then the internal temperature of the flask was raised to 80°C using a water bath. Thereafter, 2.0 parts by weight of lauryl peroxide as a polymerization initiator was added in portions. After six hours, the polymerization was terminated, whereby a (meth)acrylic resin-containing composition was obtained. The resin solid content was 50.0% by weight.

The obtained (meth)acrylic resin-containing composition was dried and dissolved in tetrahydrofuran (THF) at a resin concentration of 0.1% by weight. The resulting solution was subjected to GPC using SHODEX LF-804 as a column, and the weight average molecular weight (Mw) in terms of polystyrene was measured. The Mw was as shown in Table 1.

### (Synthesis Example 2)

A 2-L separable flask equipped with a stirring device, a condenser, a thermometer, a water bath, and a nitrogen gas inlet was provided. The 2-L separable flask was charged with 60 parts by weight of isobutyl methacrylate (iBMA) and 20 parts by weight of 2-ethylhexyl methacrylate (2EHMA). Further, 20 parts by weight of n-butyl methacrylate (nBMA) was added. They were further mixed with 10 parts by weight of butyl acetate as an organic solvent to give a monomer mixture solution.

The monomer mixture solution was bubbled with nitrogen gas to remove dissolved oxygen therefrom, and then the internal temperature of the flask was raised to 80°C using a water bath. Then, 2.0 parts by weight of lauryl peroxide as a polymerization initiator was added in portions. After six hours, the polymerization was terminated. The resin solid content was 90.9% by weight.

### (Synthesis Example 3)

A (meth)acrylic resin was produced as in Synthesis Example 1 except that the amount of iBMA added was 40 parts by weight and the amount of nBMA added was 60 parts by weight.

### (Synthesis Example 4)

A (meth)acrylic resin was produced as in Synthesis Example 2 except that the amount of iBMA added was 40 parts by weight, no 2EHMA was added, and the amount of nBMA added was 60 parts by weight.

### (Example 1)

First, 10.0 parts by weight of the (meth)acrylic resin obtained in Synthesis Example 1 as a binder resin (A) and 2.0 parts by weight of succinic anhydride as a binder removal aid (D) were added to 38.0 parts by weight of terpineol as a solvent (C), and uniformly dissolved using a high-speed stirring device. Then, 50.0 parts by weight of lithium sulfur glass powder Li₁₀GeP₂S₁₂ (LGPS, average particle size 10 µm) as inorganic particles (B) was added and dispersed using a triple-roll mill, whereby an inorganic-particle-dispersed slurry composition was obtained.

The obtained slurry composition was printed on a ceramic board using a screen printer to provide a 5-cm-square printed image and dried for 30 minutes in a fan oven set at 120°C, whereby a printed substrate was obtained.

An electric furnace was set at an internal temperature of 280°C and purged with nitrogen gas. The printed substrate was heat-treated for 60 minutes in the electric furnace, whereby debinding was completed and a fired substrate was obtained.

### (Example 2)

First, 50.0 parts by weight of Li₂S-P₂S₅ glass powder (average particle size 10 µm) as inorganic particles (B) and 38.0 parts by weight of butyl acetate as a solvent (C) were mixed, and the inorganic particles (B) were stirred for two hours using a closed-type bead mill device. Then, 10.0 parts by weight of the (meth)acrylic resin obtained in Synthesis Example 2 as a binder resin (A) and 2.0 parts by weight of maleic anhydride as a binder removal aid (D) were added, and the mixture was stirred for an additional three hours to give an inorganic-particle-dispersed slurry composition.

The obtained slurry composition was printed on an indium substrate using a die coater and dried for 30 minutes in a fan oven set at 120°C, whereby a printed substrate was obtained.

An electric furnace was set at an internal temperature of 280°C and purged with nitrogen gas. The printed substrate was heat-treated for 60 minutes in the electric furnace, whereby debinding was completed and a fired substrate was obtained.

### (Examples 3 to 5 and Comparative Examples 1, 3, 4, and 6)

An inorganic-particle-dispersed slurry composition and a fired substrate were obtained as in Example 1 except that the formulation was as shown in Table 1.

In Examples 3 to 5 and Comparative Example 3, in which Nd₂Fe₁₄B (average particle size 5 µm) was used as the inorganic particles (B), the fired substrate was obtained by performing debinding with the internal temperature of the electric furnace set at 300°C and then performing firing under a nitrogen atmosphere at 700°C for one hour.

### (Examples 6 to 8 and Comparative Examples 2, 5, and 7)

An inorganic-particle-dispersed slurry composition and a fired substrate were obtained as in Example 2 except that the formulation was as shown in Table 1.

In Examples 6 and 7 and Comparative Example 5, in which Sm₂Fe₁₇N₃ (average particle size 5 µm) was used as the inorganic particles (B), the fired substrate was obtained by performing debinding with the internal temperature of the electric furnace set at 300°C and then performing firing under a nitrogen atmosphere at 400°C for one hour.

In Example 8 and Comparative Example 7, in which GaN (average particle size 3 µm) was used as the inorganic particles (B), the fired substrate was obtained by performing debinding with the internal temperature of the electric furnace set at 300°C and then performing firing under a nitrogen atmosphere at 1,100°C for two hours.

### (Comparative Example 8)

An inorganic-particle-dispersed slurry composition was obtained as in Example 1 except that the formulation was as shown in Table 3.

The obtained slurry composition was printed on an indium substrate using a die coater and dried for 30 minutes in a fan oven set at 120°C, whereby a printed substrate was obtained.

The obtained printed substrate was heat-treated for 60 minutes in an electric furnace in a dry air atmosphere set at an internal temperature of 300°C, whereby debinding was completed and a fired substrate was obtained.

### (Example 9 and Comparative Example 9)

An inorganic-particle-dispersed slurry composition and a fired substrate were obtained as in Example 2 except that the formulation was as shown in Table 3.

### (Example 10 and Comparative Example 10)

An inorganic-particle-dispersed slurry composition and a fired substrate were obtained as in Example 3 except that the formulation was as shown in Table 3.

### (Comparative Example 11)

An inorganic-particle-dispersed slurry composition and a fired substrate were obtained as in Example 6 except that the formulation was as shown in Table 3.

### (Evaluation)

The obtained slurry compositions and fired substrates were evaluated as follows. Tables 2 and 4 show the results.

### (1) Viscosity

The viscosity at 25°C of the obtained slurry compositions immediately after production was measured using a B-type viscometer. The slurry compositions were left to stand for two weeks after production, and then the viscosity at 25°C was similarly measured. Using the viscosity immediately after production and the viscosity after two weeks, the viscosity change was calculated by the equation below and evaluated in accordance with the criteria below. A low viscosity change indicates excellent storage stability. Viscosity change (%) = |(Viscosity after two weeks - Viscosity immediately after production)/(Viscosity immediately after production)| × 100
o (Good): A viscosity change of lower than 20%
× (Poor): A viscosity change of 20% or higher

### (2) Printability

The printed images on the printed substrates were visually examined and evaluated in accordance with the criteria below.
∘ (Good): The printability was good with no defect such as fading or blurring.
× (Poor): A defect such as fading or blurring was observed.

### (3) Residual carbon

The obtained fired substrates were pulverized and used to determine the CO content and CO₂ content using a high-frequency induction furnace combustion-infrared absorption method. The residual carbon content was measured from the obtained CO content and CO₂ content and evaluated in accordance with the following criteria.
∘ (Good): A residual carbon content of 200 ppm or less
× (Poor): A residual carbon content of more than 200 ppm

### (4) Oxygen content

The oxygen content of the obtained fired substrates was measured using an oxygen/nitrogen analyzer EMGA-920 and evaluated in accordance with the following criteria.
∘ (Good): An oxygen content of less than 0.2% by weight
× (Poor): An oxygen content of 0.2% by weight or more

### (5) Cross sectional observation

Cross sections of the obtained fired substrates were observed using a SEM and evaluated in accordance with the following criteria. The voids in the sintered substrate are presumably due to decomposition of resin. Fewer voids indicate a more reliable electronic component.
∘ (Good): No voids were observed.
Δ (Fair): One or more and fewer than ten voids were observed.
× (Poor): Ten or more voids were observed.

**[Table 1]**

| | (Meth)acrylic resin (A) | | | | | | | Inorganic particles (B) | | Solvent (C) | | Binder removal aid (D) | | | | | |
|---|---|---|---|---|---|---|---|---|---|---|---|---|---|---|---|---|---|
| | Type | Composition (% by weight) | | | | Mw | Addition amount (parts by weight) | Type | Addition amount (parts by weight) | Type | Addition amount (parts by weight) | Type | | Oxygen content (% by weight) | Boiling point (°C) | Addition amount (parts by weight) | Amount relative to 100 parts by weight of resin (parts by weight) |
| | | iBMA | 2EHMA | nBMA | Segment with ester substitutent having branched structure | | | | | | | | | | | | |
| Example 1 | Synthesis Example 1 | 50 | - | 50 | 50 | 10 | 10.0 | Li₁₀GeP₂S₁₂ | 50.0 | Terpineol | 38.0 | Succinic anhydride | C₄H₄O₃ | 48.0 | 261 | 2.0 | 20 |
| Example 2 | Synthesis Example 2 | 60 | 20 | 20 | 80 | 40 | 10.0 | LiₛS-P₂S₅ | 50.0 | Butyl acetate | 38.0 | Maleic anhydride | C₄H₂O₃ | 49.0 | 202 | 2.0 | 20 |
| Example 3 | Synthesis Example 1 | 50 | - | 50 | 50 | 10 | 10.0 | Nd₂Fe₁₄B | 50.0 | Terpineol | 39.5 | Citric anhydride | C₆H₆O₆ | 55.2 | 520 | 0.5 | 5 |
| Example 4 | Synthesis Example 1 | 50 | - | 50 | 50 | 10 | 10.0 | Nd₂Fe₁₄B | 50.0 | Terpineol | 39.5 | Citric anhydride | C₆H₆O₆ | 55.2 | 520 | 0.4 | 4 |
| Example 5 | Synthesis Example 1 | 50 | - | 50 | 50 | 10 | 10.0 | Nd₂Fe₁₄B | 50.0 | Terpineol | 39.5 | Citric anhydride | C₆H₆O₆ | 55.2 | 520 | 3.5 | 35 |
| Example 6 | Synthesis Example 2 | 60 | 20 | 20 | 80 | 40 | 10.0 | Sm₂Fe₁₇N₃ | 50.0 | Butyl acetate | 39.5 | Diglycolic anhydride | C₄H₄O₄ | 55.2 | 240 | 0.5 | 5 |
| Example 7 | Synthesis Example 4 | 40 | - | 60 | 40 | 40 | 10.0 | Sm₂Fe₁₇N₃ | 50.0 | Butyl acetate | 39.5 | Diglycolic anhydride | C₄H₄O₄ | 55.2 | 240 | 0.5 | 5 |
| Example 8 | Synthesis Example 2 | 60 | 20 | 20 | 80 | 40 | 10.0 | GaN | 50.0 | Butyl acetate | 37.0 | 2-Methoxyacetic anhydride | C₆H₁₀O₅ | 49.4 | 215 | 3.0 | 30 |
| Comparative Example 1 | Synthesis Example 1 | 50 | - | 50 | 50 | 10 | 10.0 | Li₁₀GeP₂S₁₂ | 50.0 | Terpineol | 40.0 | - | - | - | - | - | - |
| Comparative Example 2 | Synthesis Example 2 | 60 | 20 | 20 | 80 | 40 | 10.0 | LiₛS-P₂S₅ | 50.0 | Butyl acetate | 38.0 | Phthalic anhydride | C₈H₄O₃ | 32.4 | 284 | 2.0 | 20 |
| Comparative Example 3 | Synthesis Example 3 | 40 | - | 60 | 40 | 10 | 10.0 | Nd₂Fe₁₄B | 50.0 | Terpineol | 38.0 | Propionic anhydride | C₆H₁₀O₃ | 36.9 | 167 | 2.0 | 20 |
| Comparative Example 4 | Synthesis Example 1 | 50 | - | 50 | 50 | 10 | 10.0 | Li₁₀GeP₂S₁₂ | 50.0 | Terpineol | 38.0 | Adipic acid | C₆H₁₀O₄ | 43.8 | 338 | 2.0 | 20 |
| Comparative Example 5 | Synthesis Example 4 | 40 | - | 60 | 40 | 40 | 10.0 | Sm₂Fe₁₇N₃ | 50.0 | Butyl acetate | 39.5 | Adipic acid | C₆H₁₀O₄ | 43.8 | 338 | 0.5 | 5 |
| Comparative Example 6 | Synthesis Example 1 | 50 | - | 50 | 50 | 10 | 10.0 | Li₁₀GeP₂S₁₂ | 50.0 | Terpineol | 38.0 | Acetic anhydride | C₄H₆O₃ | 47.1 | 140 | 3.0 | 30 |
| Comparative Example 7 | Synthesis Example 4 | 40 | - | 60 | 40 | 40 | 10.0 | GaN | 50.0 | Butyl acetate | 37.0 | Acetic anhydride | C₄H₆O₃ | 47.1 | 140 | 3.0 | 30 |

**[Table 2]**

| | Evaluation of slurry composition | | | | | | Evaluation of inorganic sintered article | | | | | |
|---|---|---|---|---|---|---|---|---|---|---|---|---|
| | Viscosity (mPa·s) | | | | Printability | | Residual carbon | | Oxygen content (% by weight) | | Cross-sectional observation | |
| | Immediately after production | After 2 weeks | Change (%) | | | | ppm | Evaluation | | | | |
| Example 1 | 12000 | 14000 | 16.7 | ○ | Good | ○ | 90 | ○ | 0.04 | ○ | No voids | ○ |
| Example 2 | 7200 | 7400 | 2.8 | ○ | Good | ○ | 80 | ○ | 0.08 | ○ | No voids | ○ |
| Example 3 | 12000 | 13000 | 8.3 | ○ | Good | ○ | 140 | ○ | 0.11 | ○ | No voids | ○ |
| Example 4 | 12000 | 13000 | 8.3 | ○ | Good | ○ | 150 | ○ | 0.15 | ○ | No voids | ○ |
| Example 5 | 13000 | 15500 | 19.2 | ○ | Good | ○ | 80 | ○ | 0.04 | ○ | No voids | ○ |
| Example 6 | 6800 | 7200 | 5.9 | ○ | Good | ○ | 160 | ○ | 0.09 | ○ | No voids | ○ |
| Example 7 | 6000 | 6300 | 5.0 | ○ | Good | ○ | 190 | ○ | 0.09 | ○ | No voids | ○ |
| Example 8 | 7500 | 7800 | 4.0 | ○ | Good | ○ | 30 | ○ | 0.02 | ○ | No voids | ○ |
| Comparative Example 1 | 11000 | 13000 | 18.2 | ○ | Good | ○ | 600 | × | 0.09 | ○ | Many voids | × |
| Comparative Example 2 | 7600 | 8000 | 5.3 | ○ | Good | ○ | 280 | × | 0.14 | ○ | 5 voids | Δ |
| Comparative Example 3 | 13000 | 19000 | 46.2 | × | Good | ○ | 240 | × | 0.15 | ○ | 5 voids | Δ |
| Comparative Example 4 | 14000 | 17000 | 21.4 | × | Good | ○ | 320 | × | 0.28 | × | 5 voids | Δ |
| Comparative Example 5 | 7500 | 8000 | 6.7 | ○ | Fading | × | 180 | ○ | 0.28 | × | 7 voids | Δ |
| Comparative Example 6 | 13000 | 16000 | 23.1 | × | Fading | × | 280 | × | 0.32 | × | Many voids | × |
| Comparative Example 7 | 6500 | 9000 | 38.5 | × | Blurring | × | 420 | × | 0.44 | × | Many voids | × |

**[Table 3]**

| | Binder resin | | | Inorganic particles (B) | | Solvent (C) | | Binder removal aid (D) | | | | | |
|---|---|---|---|---|---|---|---|---|---|---|---|---|---|
| | Type | Mw | Addition amount (parts by weight) | Type | Addition amount (parts by weight) | Type | Addition amount (parts by weight) | Type | | Oxygen content (% by weight) | Boiling point (°C) | Addition amount (parts by weight) | Amount relative to 100 parts by weight of resin (parts by weight) |
| Example 9 | Polycarbonate | 40 | 10.0 | LiₛS-P₂S₅ | 50.0 | Ethylene carbonate | 38.0 | Maleic anhydride | C₄H₂O₃ | 49.0 | 202 | 2.0 | 20 |
| Example 10 | Polyacetal | 10 | 10.0 | Nd₂Fe₁₄B | 50.0 | Terpineol | 39.5 | Diglycolic anhydride | C₄H₄O₄ | 55.2 | 520 | 0.5 | 5 |
| Comparative Example 8 | Polystyrene | 10 | 10.0 | Li₁₀GeP₂S₁₂ | 50.0 | Terpineol | 40.0 | - | - | - | - | - | - |
| Comparative Example 9 | Polycarbonate | 40 | 10.0 | LiₛS-P₂S₅ | 50.0 | Ethylene carbonate | 40.0 | - | - | - | - | - | - |
| Comparative Example 10 | Polyacetal | 10 | 10.0 | Nd₂Fe₁₄B | 50.0 | Terpineol | 40.0 | - | - | - | - | - | - |
| Comparative Example 11 | Polyvinyl acetate | 40 | 10.0 | Sm₂Fe₁₇N₃ | 50.0 | Butyl acetate | 40.0 | - | - | - | - | - | - |

**[Table 4]**

| | Evaluation of slurry composition | | | | | | Evaluation of inorganic sintered article | | | | | |
|---|---|---|---|---|---|---|---|---|---|---|---|---|
| | Viscosity (mPa·s) | | | | Printability | | Residual carbon | | Oxygen content (% by weight) | | Cross-sectional observation | |
| | Immediately after production | After 2 weeks | Change (%) | | | | ppm | Evaluation | | | | |
| Example 9 | 6000 | 6800 | 13.3 | ○ | Good | ○ | 110 | ○ | 0.19 | ○ | No voids | ○ |
| Example 10 | 32000 | 37000 | 15.6 | ○ | Good | ○ | 190 | ○ | 0.12 | ○ | No voids | ○ |
| Comparative Example 8 | 18000 | 12000 | 33.3 | × | Good | ○ | 900 | × | 0.34 | × | Many voids | × |
| Comparative Example 9 | 5000 | 6200 | 240 | × | Good | ○ | 210 | × | 0.48 | × | Many voids | × |
| Comparative Example 10 | 30000 | 25000 | 16.7 | ○ | Good | ○ | 240 | × | 0.15 | ○ | Many voids | × |
| Comparative Example 11 | 3900 | 4400 | 12.8 | ○ | Good | ○ | 380 | × | 0.14 | ○ | Many voids | × |

### INDUSTRIAL APPLICABILITY

The present invention can provide an inorganic-particle-dispersed slurry composition that has excellent storage stability and printability, can promote binder removal treatment even at low temperature, can suppress oxidation of inorganic particles, leaves less residual carbon after firing, has excellent sinterability, and can provide a highly reliable electronic component. The present invention can also provide a method for producing an inorganic sintered article using the slurry composition.

## Claims

1. An inorganic-particle-dispersed slurry composition, comprising:
a binder resin (A);
inorganic particles (B); and
a solvent (C),
the inorganic-particle-dispersed slurry composition further comprising, as a binder removal aid (D), a carboxylic anhydride having a boiling point of 200°C or higher and an oxygen atom content of 40% by weight or more.

2. The inorganic-particle-dispersed slurry composition according to claim 1,
wherein the carboxylic anhydride is an anhydride of at least one carboxylic acid selected from the group consisting of succinic acid, maleic acid, citric acid, glutaric acid, diglycolic acid, methoxyacetic acid, itaconic acid, citraconic acid, trimellitic acid, cyclobutanetetracarboxylic acid, tricarballylic acid, butanetetracarboxylic acid, and cyclopentanetetracarboxylic acid.

3. The inorganic-particle-dispersed slurry composition according to claim 1 or 2,
wherein the carboxylic anhydride is contained in an amount of 5 parts by weight or more and 30 parts by weight or less relative to 100 parts by weight of the binder resin (A).

4. The inorganic-particle-dispersed slurry composition according to any one of claims 1 to 3,
wherein the binder resin (A) contains a (meth)acrylic resin.

5. The inorganic-particle-dispersed slurry composition according to claim 4,
wherein the (meth)acrylic resin contains 50% by weight or more of a segment derived from a (meth)acrylate containing an ester substituent having a carbon number of 4 or greater and having a branched structure.

6. A method for producing an inorganic sintered article, comprising the steps of: drying the inorganic-particle-dispersed slurry composition according to any one of claims 1 to 5 to provide an inorganic-particle-dispersed formed article; and debinding the inorganic-particle-dispersed formed article at 300°C or lower.
